# EUROPÄISCHE PATENTSCHRIFT

(11) **EP 1 397 391 B1**
(45) Veröffentlichungstag und Bekanntmachung des Hinweises auf die Patenterteilung: **24.01.2007**
(21) Anmeldenummer: 02735345.7
(22) Anmeldetag: 08.05.2002
(51) Int. Cl.: C08F 2/02, C08F 2/06

(54) **VERFAHREN ZUR DURCHFÜHRUNG VON POLYMERISATIONSREAKTIONEN**
METHOD FOR CARRYING OUT POLYMERIZATION REACTIONS
PROCEDE PERMETTANT D'EFFECTUER DES REACTIONS DE POLYMERISATION

(30) Priorität: 09.05.2001 DE 10122571; 16.08.2001 DE 10140217; 06.11.2001 DE 10153966
(43) Veröffentlichungstag der Anmeldung: 17.03.2004
(73) Patentinhaber: LIST AG, 4422 Arisdorf (CH)
(72) Erfinder: FLEURY, Pierre-Alain, CH-4433 Ramlingsburg (CH)
(74) Vertreter: Weiss, Peter
(86) Internationale Anmeldenummer: PCT/EP2002/005073
(87) Internationale Veröffentlichungsnummer: WO 2002/090391

(56) Entgegenhaltungen:
- EP-A- 0 548 991

## Beschreibung

Die Erfindung betrifft ein Verfahren zur Durchführung von Polymerisationsreaktionen in einem Reaktor, wobei in den Reaktor Monomere und/oder Prepolymere eingegeben (eindosiert) werden.

Unter Polymerisation wird die Überführung von niedermolekularen Verbindungen (Monomeren, Oligomeren) in hochmolekulare Verbindungen (Polymere, Makromoleküle, Polymerisate) verstanden. Dabei kann die industrielle Herstellung von Polymeren unter heterogenen oder homogenen Bedingungen erfolgen. Unter heterogenen Reaktionen wird die Polymerisation in Suspension/Emulsion und Ausfällungsreaktionen verstanden. Diese Polymerisationsverfahren in Suspension/Emulsion werden normalerweise in Rührkesseln durchgeführt.

Die Ausfällpolymerisation erfolgt häufig unter Verwendung der thermodynamischen Abtrennung des Polymers aus seinem Monomer und/oder einem Lösungsmittel. Voraussetzung dafür ist, dass das Polymer im Monomer bzw. dem Lösungsmittel unlöslich ist. Bei dieser Art der Herstellung fällt das Polymer aus.

Die heterogene Polymerisation wird üblicherweise auf Bandreaktoren [für PIB (Polyisobutylen), PVBE (Polyvinylisobutylether)] oder in Knetreaktoren [für SPS (syndiotaktisches Polystyren), POM (Polyoxymethylen)] realisiert. Im Bandreaktor kann aufgrund der grossen Brüdenpassagen die Polymerisationstemperatur durch Verdampfung des Lösungsmittels kontrolliert werden, es findet jedoch keine Gutsbewegung und damit auch keine Produktoberflächenerneuerung statt. Bei den klassischen Knetreaktoren (z. B. der Firmen Kurimoto und Mitsubishi Heavy Industries) dagegen findet eine intensive Produktoberflächenerneuerung statt, es sind jedoch keine Brüdenpassagen für die Verdampfungskühlung vorhanden, so dass die Wärme nur über Kontakt mit dem gekühlten Doppelmantel abgeführt werden kann.

Polymerisationsreaktionen unter homogenen Bedingungen finden bis heute nur oberhalb der Glasübergangstemperatur bzw. des Schmelzpunktes des Polymers statt, d.h. sie werden in der Schmelze realisiert. Die Firma Sulzer Chemtec hat z. B. eine kontinuierliche, homogene Polymerisation von Styrol und MMA (Methylmethacrylat) in einem Kreislaufreaktor mit statischen Mischelementen entwickelt. Dieses Verfahren erfordert hohe Temperaturen, um die Viskosität der Reaktionsmasse niedrig zu halten und damit Beläge an den Reaktorwänden und den Mischelementen zu vermeiden. Solche hohen Temperaturen haben aber unerwünschte Nebenwirkungen, z. B. die Bildung von Oligomeren oder die De-Polymerisation.

Der vorliegenden Erfindung liegt die Aufgabe zugrunde, ein Verfahren der oben genannten Art zu entwickeln, bei dem die Polymerisationsreaktion unter homogenen Bedingungen wesentlich verbessert ist.

Zur Lösung dieser Aufgabe führt, dass in einer ersten Stufe dem Monomer und/oder Prepolymer ggf. ein Initiator beigeschmischt und erst in einer zweiten Stufe, wenn die Viskosität wesentlich höher ist, ein Lösungsmittel dazu gegeben wird und/oder das Monomer selbst teilweise verdampft, extern und/oder intern kondensiert und wieder in den Reaktor zurückgeführt wird.

Bekannt ist, dass das Lösungsmittel die Reaktion langsamer macht, da das Lösungsmittel verdampft werden muss. Erfindungsgemäss soll das Verfahren in der ersten Phase ohne Lösungsmittel auskommen. Das bedeutet, dass die Reaktion etwa vier mal schneller von statten geht, da die Konzentration des Monomers bzw. Prepolymers höher ist. Auch die gewünschte Viskosität wird dadurch wesentlich schneller erreicht. Erst wenn die Viskosität eine bestimmte Höhe erreicht hat, wird das Lösungsmittel dazu gegeben, wobei das Lösungsmittel im wesentlichen nur den Zweck hat, die Masse zu kühlen.

Die Folge dieses erfindungsgemässen Verfahrens ist, dass wesentlich weniger Lösungsmittel notwendig ist, da das Lösungsmittel auf der Oberfläche der Masse verdampft und die Masse kühlt. Ferner ist es gleichgültig, ob ein gutes oder weniger gutes Lösungsmittel, verwendet wird, da das Lösungsmittel sofort wieder verdampft und abgezogen, d. h. recycliert wird.

Bspw. wird einer PMMA-Masse bei einer Temperatur von 90° ein Lösungsmittel zugegeben. Dieses Lösungsmittel kühlt die Masse auf 60°, wobei bei 60° das PMMA granuliert. Das Lösungsmittel verdampft aber auch noch bei 40°.

Bei einem weiteren Ausführungsbeispiel der Erfindung, für welches auch selbständig Schutz begehrt wird, soll die Polymerisation bei amorphen Polymeren unterhalb der Glasübergangstemperatur bzw. bei kristallinen Polymeren unterhalb des Schmelzpunktes erfolgt.

Bevorzugt erfolgt die Polymerisation direkt bis auf den Granulatzustand.

Unter der Glasübergangstemperatur wird die Temperatur verstanden, bei der amorphe oder teilkristalline Polymere vom flüssigen oder gummielastischen Zustand in den hartelastischen oder glasigen Zustand übergehen oder umgekehrt. Gemäss der vorliegenden Erfindung wird die Polymermasse im Reaktor durch eine Schneid- bzw. Verteilwirkung/Zerkleinerungswirkung von Rührern granuliert. Im so entstandenen Granulat polymerisiert das Monomer weiter.

Zur Durchführung des erfindungsgemässen Verfahrens finden bevorzugt zweiwellige Knetreaktoren Anwendung, wie sie beispielsweise in der DE 199 40 521 A1 oder der DE 41 18 884 A1 gezeigt sind. Diese Reaktoren haben den Vorteil, dass sowohl eine grosse Brüdenpassage für die Verdampfungskühlung als auch eine optimale Produktoberflächenerneuerung gegeben sind. Dank der grossen Brüdenpassage des Knetreaktors kann die Verdampfungskühlung dazu benutzt werden, die Reaktionswärme und die bis zum Granulierungspunkt entstehende Knetenergie abzuführen.

Der Knetreaktor ist in Bezug auf die Selbstreinigung und die Vermeidung von toten Zonen optimiert. Ferner ist die Form der Knetbarren derart gewählt worden, dass beim gegenseitigen Eingriff der Knet- bzw. Rührbarren keine Kompressionszonen auftreten. Damit kann die Granulierung der homogenen Polymermasse ohne örtliche Überhitzung, hervorgerufen durch übermässige Knetenergie und Mahlwirkung, durchgeführt werden.

Das gesamte Verfahren soll kontinuierlich ablaufen. Dabei findet eine gezielte, axiale Förderung der pasteusen Masse statt. Hierbei sind verschiedene Wellengeometrien wählbar. Die Förderwinkel der Knetbarren sind anpassbar und dienen zur axialen Förderung der Masse im Reaktor. Es besteht ferner auch die Möglichkeit, Rückförderzonen einzubauen, die den Füllgrad im Reaktor kontrollieren.

Insbesondere bei Verfahren und/oder Produkten, die eine sehr lange Verweilzeit im Knetreaktor verbringen müssen, kann der Knetreaktor mit einem Prepolymer anstatt mit Monomeren dosiert werden. Das bedeutet, das vor der eigentlichen Polymerisation im Knetreaktor eine Prepolymerisation in einem entsprechenden Kessel erfolgt.

### Beispiel:

In einem Zweiwellen-Knetreaktor gemäss der DE 41 18 884 A1 wird eine homogene Polymerisation von MMA (Methylmethacrylat) unterhalb des Glaspunkts (Tg = lo5°C) durchgeführt. Der Knetreaktor wurde mit MMA als Monomer, Diethyläther als Lösungsmittel und mit Perkadox 16 (Elf-Atochem) als Initiator geladen. Die Wandtemperatur wurde auf 38°C und die Rührerdrehzahl auf 30 UpM eingestellt. Die flüssige Masse wurde mit Stickstoff bei 5°C gespült.

Nach 200 Minuten war die Viskosität der Masse derart angestiegen, dass sie sich um die Rührwellen wickelte. Nach 308 Minuten begann die Polymermasse zu granulieren und war nach 330 Minuten gesamthaft in ein rieselfähiges Granulat umgewandelt. Die Knetenergie wurde in dieser Umwandlungsphase mit 0,35 MJ/kg gemessen. Das Granulat wurde nach 340 Minuten ausgeladen und zeigte folgende Eigenschaften:
Umsatz von 97%
Molekularmasse 255'000 g/mol
Polydispersitätsindex von 2,5
Restlösungsmittelgehalt von 7%.

Die Produkttemperatur wurde mittels der Verdampfungskühlung im Bereich von 42° bis 60°C kontrolliert. Der zeitliche Verlauf der Kondensatmenge und der Produkttemperatur lassen auf einen starken Trommsdorf-Effekt schliessen.

## Patentansprüche

1. Verfahren zur Durchführung von homogenen Polymerisationsreaktionen in einem Reaktor, wobei in den Reaktor Monomere und/oder Prepolymere eingegeben (eindosiert) werden,
**dadurch gekennzeichnet,**
**dass** in einer ersten Stufe dem Monomer und/oder Prepolymer ggf. ein Initator beigemischt und erst in einer zweiten Stufe, wenn die Viskosität wesentlich höher ist, ein Lösungsmittel dazu gegeben wird und/oder das Monomer selbst teilweise verdampft, extern und/oder intern kondensiert und wieder in den Reaktor zurückgeführt wird.

2. Verfahren zur Durchführung von homogenen Polymerisationsreaktionen in einem Reaktor, wobei in den Reaktor Monomere und/oder Prepolymere eingegeben (eindosiert) werden, **dadurch gekennzeichnet, dass** die Polymerisation bei amorphen Polymeren unterhalb der Glasübergangstemperatur bzw. bei kristallinen Polymeren unterhalb des Schmelzpunktes erfolgt.

3. Verfahren nach Anspruch 1 oder 2, **dadurch gekennzeichnet, dass** die Polymerisation direkt bis auf den Granulatzustand erfolgt.

4. Verfahren nach einem der Ansprüche 1 bis 3, **dadurch gekennzeichnet, dass** die Masse in dem Reaktor bewegt wird.

5. Verfahren nach Anspruch 4, **dadurch gekennzeichnet, dass** bei der Bewegung der Masse in dem Reaktor Kompressionszonen vermieden werden.

6. Verfahren nach wenigstens einem der Ansprüche 1 bis 5 , **dadurch gekennzeichnet, dass** die Polymerisation kontinuierlich durchgeführt wird.

7. Verfahren nach wenigstens einem der Ansprüche 1 bis 6, **dadurch gekennzeichnet, dass** die Masse im Reaktor granuliert wird.

8. Verfahren nach wenigstens einem der Ansprüche 1 bis 7, **dadurch gekennzeichnet, dass** die Masse im Reaktor zumindest teilweise durch Verdampfung von Lösungsmitteln und/oder Monomeren gekühlt wird.

9. Verfahren nach wenigstens einem der Ansprüche 1 bis 8, **dadurch gekennzeichnet, dass** die Polymerisation in einem zweiwelligen Knetreaktor erfolgt.

10. Verfahren nach wenigstens einem der Ansprüche 1 bis 9, **dadurch gekennzeichnet, dass** vor der Polymerisation in einem Reaktor (Knetreaktor) eine Prepolymerisation insbesondere in einem Kessel erfolgt.

## Claims

1. Method of accomplishing homogeneous polymerisation reactions in a reactor, wherein monomers and/or prepolymers are introduced (metered) into the reactor, **characterised in that**, in a first step, an initiator is possibly admixed with the monomer and/or prepolymer, and only in a second step, when the viscosity is substantially higher, is a solvent added thereto and/or the monomer itself is partially evaporated, externally and/or internally condensed and conducted-back again into the reactor.

2. Method of accomplishing homogeneous polymerisation reactions in a reactor, wherein monomers and/or prepolymers are introduced (metered) into the reactor, **characterised in that**, in the case of amorphous polymers, the polymerisation is effected below the glass transition temperature or respectively, in the case of crystalline polymers, the polymerisation is effected below the melting point.

3. Method according to claim 1 or 2, **characterised in that** the polymerisation is effected directly up to the granulate state.

4. Method according to one of claims 1 to 3, **characterised in that** the mass is displaced in the reactor.

5. Method according to claim 4, **characterised in that** compression zones are avoided during the displacement of the mass in the reactor.

6. Method according to at least one of claims 1 to 5, **characterised in that** the polymerisation is accomplished continuously.

7. Method according to at least one of claims 1 to 6, **characterised in that** the mass in the reactor is granulated.

8. Method according to at least one of claims 1 to 7, **characterised in that** the mass in the reactor is cooled at least partially by the evaporation of solvents and/or monomers.

9. Method according to at least one of claims 1 to 8, **characterised in that** the polymerisation is effected in a two-shafted kneading reactor.

10. Method according to at least one of claims 1 to 9, **characterised in that**, prior to the polymerisation in a reactor (kneading reactor), a prepolymerisation is effected, more especially in a boiler.

## Revendications

1. Procédé permettant d'effectuer des réactions de polymérisation complètement homogènes dans un réacteur, dans le réacteur étant introduits (de manière dosée) des monomères et/ou des prépolymères,
**caractérisé par le fait**
**que** dans une première étape est mélangé au monomère et/ou au prépolymère éventuellement un initiateur et que ce n'est que dans une deuxième étape, lorsque la viscosité est sensiblement plus haute, qu'il est ajouté un solvant et/ou que le monomère lui-même s'évapore partiellement, se condense extérieurement et/ou intérieurement et est à nouveau alimenté vers le réacteur.

2. Procédé permettant d'effectuer des réactions de polymérisation homogènes dans un réacteur, dans le réacteur étant introduits (de manière dosée) des monomères et/ou des prépolymères, **caractérisé par le fait que** la polymérisation a lieu, dans le cas de polymères amorphes, au-dessous de la température de transition de verre ou, dans le cas de polymères cristallins, au-dessous du point de fusion.

3. Procédé selon la revendication 1 ou 2, **caractérisé par le fait que** la polymérisation a lieu directement jusqu'à l'état de granulés.

4. Procédé selon l'une des revendications 1 à 3, **caractérisé par le fait que** la masse est mue dans le réacteur.

5. Procédé selon la revendication 4, **caractérisé par le fait que** lors du mouvement de la masse dans le réacteur sont évitées les zones de compression.

6. Procédé selon au moins l'une des revendications 1 à 5, **caractérisé par le fait que** la polymérisation s'effectue en continu.

7. Procédé selon au moins l'une des revendications 1 à 6, **caractérisé par le fait que** la masse est granulée dans le réacteur.

8. Procédé selon au moins l'une des revendications 1 à 7, **caractérisé par le fait que** la masse dans le réacteur est refroidie au moins partiellement par évaporation de solvants et/ou de monomères.

9. Procédé selon au moins l'une des revendications 1 à 8, **caractérisé par le fait que** la polymérisation a lieu dans un réacteur-pétrisseur à deux arbres.

10. Procédé selon au moins l'une des revendications 1 à 9, **caractérisé par le fait qu'**avant la polymérisation dans un réacteur (réacteur-pétrisseur) a lieu une prépolymérisation, en particulier dans une chaudière.
